Europäisches Patentamt

(19) European Patent Office

Office européen des brevets

(11) Publication number : **0 368 370 B1**

# EUROPEAN PATENT SPECIFICATION

(12)

(45) Date of publication of patent specification :
07.04.93 Bulletin 93/14

(51) Int. Cl.⁵ : **C04B 35/10,** C03B 37/00,
C03C 13/00

(21) Application number : **89124021.0**

(22) Date of filing : **16.04.87**

(54) **Refractory fibers of amorphous alumina and organic residue.**

(30) Priority : **21.04.86 US 854319**

(43) Date of publication of application :
**16.05.90 Bulletin 90/20**

(60) Publication number of the earlier application in
accordance with Art. 76 EPC : **0 243 123**

(45) Publication of the grant of the patent :
**07.04.93 Bulletin 93/14**

(84) Designated Contracting States :
**DE FR GB IT**

(56) References cited :
**AT-B- 357 925**
**DE-A- 3 318 168**
**US-A- 3 982 955**

(73) Proprietor : **MINNESOTA MINING AND
MANUFACTURING COMPANY
3M Center, P.O. Box 33427
St. Paul, Minnesota 55133-3427 (US)**

(72) Inventor : **Sowman, Harold G. c/o Minnesota
Mining and
Manufacturing Company 2501 Hudson Road
St. Paul Minnesota 55144-1000 (US)**
Inventor : **Tran, Tai T. c/o Minnesota Mining
and
Manufacturing Company 2501 Hudson Road
St. Paul Minnesota 55144-1000 (US)**

(74) Representative : **Baillie, Iain Cameron et al
c/o Ladas & Parry, Altheimer Eck 2
W-8000 München 2 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to fired fibers of alumina and organic residue and articles made therefrom. In another aspect, it relates to a process for the preparation of such fired fibers. The fibers are useful in the manufacture of fire-resistant materials.

The present application is divided from European Patent Application No. 87303421 (publication No. EP-A-243,123), to which reference is directed. The above parent application discloses and claims amorphous fibers of alumina and phosphorus pentoxide, and a method for their production.

Ceramic fibers containing aluminum/phosphorus components are known in the art. They are known to be crystalline in structure which accounts for their friability. These fibers are not well suited for the manufacture of textile fabrics.

Ceramic fibers containing phosphates of aluminum have been disclosed. US Patent No. 4,008,299 teaches essentially crystalline filaments of aluminum phosphate. Various additives can provide some non-crystalline character. U.S. Patent No. 3,788,885 discloses a process for binding inorganic fibrous materials which comprises applying a solution of a complex phosphate of aluminum to a fibrous material.

Polycrystalline oxide fibers, including $Al_2O_3.P_2O_5$, which melt above 1600°C are disclosed in U.S. Patent No. 3,322,865.

GB 1,360,200 discloses a fiber comprising a metal compound and polyvinyl alcohol or partially hydrolyzed polyvinyl acetate and a process therefor.

U.S. 3,982,955 discloses aluminum oxide fibers having the following composition by weight:

| | | |
|---|---|---|
| $Al_2O_3$ | 61-98% | (preferably 76-96%) |
| $SiO_2$ | 1-20% | (preferably 3-15%) |
| $P_2O_5$ | 0-10% | (preferably 0-5%) |
| $B_2O_3$ | 0-10% | (preferably 0-5%) |
| $MgO$ | 0-5% | (preferably 0-1%) |
| C | 0.1-4% | (preferably 0.5 - 2.8%) |

The fibers are formed by spinning a low viscosity solution containing polyethylene oxide (having a viscosity typically of the order of 270mPas ) through a heated spinning column (in which solvent is evaporated) and heating the resulting green fibers in air to drive off organic matter. The resulting fibers have an irregular cross-section. If the final heat treatment step is carried out at a temperature below 1,100°C, carbon remains in the fiber and the resulting carbon-containing filaments are stated to be amorphous to X-rays and to possess good mechnical properties. However the only amorphous fiber specifically disclosed (in Example 4) is composed of alumina, silica and carbon only and has the same tensile strength but a lower modulus than that of a comparable crystalline fiber.

The present invention provides a fired, amorphous, soft, flexible organic - inorganic hybrid consisting essentially of amorphouse alumina and fugitive organic residue, the proportion of the fugitive organic residue being up to 25% by weight, based on the total fiber composition, the fibers being essentially free of silica.

The invention also provides a method of forming a fired fiber as claimed in claim 1, comprising the steps of preparing a viscous sol containing an alumina precursor and organic material, drawing or spinning the sol to form a fiber, dehydratively or evaporatively gelling or hydrolysing the drawn or spun fibers, drying the fiber and firing the fiber.

Heating and firing the shaped green fiber removes water, decomposes and volatilizes undesired fugitive constituents, and converts it into the fired fiber of the invention.

In this application:

"ceramic" means inorganic nonmetallic material consolidated by the action of heat, such as metal and nonmetal oxides;

"sol" means a fluid solution or a colloidal suspension;

"non-melt" means that the mixture is not melted although one of the components may be;

"homogeneous" means of uniform composition;

"non-vitreous" means not formed from a melt of the oxide mixture;

"green" refers to the ceramic articles which are unfired.

"amorphous" means a material having a diffuse x-ray diffraction pattern without definite lines to indicate the presence of a crystalline component;

"refractory" means resistant to high temperatures, e.g. up to 900-1000°C;

"dehydrative gelling" or "evaporative gelling" mean that sufficient water and volatile material are removed from the shaped green fibers so that the form or shape of the fiber is sufficiently rigid to permit handling or processing without significant loss or distortion of the desired fibrous form or shape. Therefore, all the water in the shaped fiber need not be removed. Thus, in a sense, this step can be called partial dehydrative gelling. The shaped fibers in their green form are generally transparent to visible light and clear under an optical microscope;

"continuous fiber" means a fiber (or multi-fiber article such as a strand) which has a length which is infinite for practical purposes as compared to its diameter;

"textile fiber" means a fiber having a soft hand suitable for the consumer market rather than heavy duty industrial textiles.

To prepare the fibers of the invention optional components such as polyvinylpyrrolidone or precursors of oxides such as copper, iron, nickel, chromium, etc. for color or other property modifications are mixed with an alumina precursor to form a homogeneous liquid precursor mixture. The components are concentrated to a fiber-forming consistency (i.e. when a rod is inserted and pulled out, a fiber is formed), by evaporation of solvent or removal of solvent from the precursor liquid mixture. To facilitate spinning of continuous fibers it is preferable that the concentrate has a viscosity in the range of 50 to 100 Pas. For spinning of staple form fibers (as by use of spinning discs or blowing processes) much lower viscosities, i.e. down to 10 Pas are usable. Drying or removal of at least part of the water from the shaped fiber causes it to gel or become rigid. The resulting shaped "green" or non-fired amorphous fiber can be further heated and fired, which removes the remaining water, decomposes and volatilizes the undesired fugitive constituents and converts it into a fired fiber.

The alumina precursor useful in the present invention can include aluminum formoacetate or an aqueous aluminum chloride solution described below. Preferably, the alumina precursor can be prepared by digesting aluminum metal foil in hot aqueous aluminum chloride solution, the alumina equivalent of the final mixture being about 20 to 23% by weight.

For high carbon content (black) fibers, polyvinylpyrrolidone (PVP), present in an amount 25 to 100 parts based on dry weight PVP to 100 parts oxide equivalent is a preferred carbon source. The PVP polymer serves not only as the carbon source but it is also useful as the viscosity modifier for spinning purposes. A convenient form for the addition of PVP is an aqueous solution with 50 weight percent K-30™, 40,000 molecular weight (GAF, Texas City, TX).

The precursor liquid used to make the fired fibers of this invention optionally can also contain various other water-soluble metal compounds (calcinable to metal oxide) which will impart additional desired properties to the fired fibers. For example, an optional component can upon being oxidized or converted to the corresponding metal oxide, be used to adjust refractive index, dielectric properties, or to impart, without sacrifice of clarity, an internal color to the fired fiber. Thus ferric nitrate can be added to impart an orange to gold color, chromium formate, acetate, or trioxide to impart to the fibers a green color, cobalt acetate or nitrate to impart a blue or lavender color, vanadyl sulfate to impart a yellow color, and nickel acetate to impart a light green to blue color. Such colored refractory fibers are desirable for the weaving of design textile fabrics. These colored filaments are also useful for color coding in ceramic fiber articles. The ferric oxide-containing refractory can be reduced in a hydrogen atmosphere to produce a cermet, black in color and attractive to a magnet. Other optional compounds are the water soluble nitrates, formates, acetates, citrates, lactates, tartrates, or oxalates of lithium, sodium, potassium, magnesium, calcium, strontium, barium, yttrium, titanium, zirconium, chromium, manganese, iron, cobalt, nickel, copper, zinc, tin, antimony, lanthanum, and vanadium as vanadyl sulfate.

The amount of such other optional metal oxide in the fired fiber can vary, depending upon the property effect desired, for example the tone of the color or hue desired, but generally will comprise an amount in the range of as low as 0.05 to 0.5 and can be as much as 25 weight percent based on the total weight of the oxide components in the fired fiber.

The fiber precursor material initially will typically be a relatively dilute liquid, generally containing about 10-30 weight percent equivalent oxide, which can be calculated from a knowledge of the equivalent solids in the original materials and the amount used, or determined by calcining samples of the component starting materials. For the preparation of a fiber, it is necessary to concentrate or viscosity the dilute liquid mixture of precursors in order to convert it to a viscous or syrupy fluid concentrate. The concentrate will readily gel when it is fiberized and dehydrated, for example, when the concentrate is extruded and drawn in air to form the fiber. For example, the mixture can be concentrated with a Rotavapor™ (Buchi, Switzerland) flask under vacuum. The concentration procedures are well known in the art; see for example, U.S. Pat. No. 3,795,524. Sufficient concentration will be obtained when the equivalent oxide solids content is generally in the range of 25 to 55 (as determined by calcining a sample of the concentrate), and viscosities (Brookfield at ambient room temperature) are in the range of 10 to 1,000 Pas, preferably 40 to 100 Pas, depending on the type of fiberizing or dehydrative gelling technique and apparatus used and the desired shape of the gelled fiber. High viscosities tend to result in fibers which are more circular in cross-section whereas low viscosities (e.g., less than 50 Pas) tend to result in fibers which are more oval or rod-like (elongated ovoid) in cross-section.

In making continuous fibers, the viscous concentrate can be extruded through a plurality of orifices (e.g., a total of 10 to 400) from a stationary head and resulting green fibers allowed to fall in the air by the force of gravity or drawn mechanically in air by means of drawing rolls or a drum or winding device rotating at a speed faster than the rate of extrusion. The concentrate can also be extruded through orifices from a stationary or rotating head and at the orifice exit blown by a parallel, oblique or tangential stream of high pressure air, such as in the making of cotton candy, the resulting blown green fibers being in essentially staple or short form with lengths generally 25 cm or less (rather than the continuous filament form) and collected on a screen or the like in the form of a mat. Any of these forces exerted on the extruded, green fibers cause attenuation or stretching of the fibers, and can reduce their diameter by about 50 to 90 percent or more and increase their length by about 300 to 1000 percent or more and serve to hasten or aid the drying of green fibers.

The dehydrative gelling of the green fibers can be carried out in ambient air, or heated air if desired or necessary for faster drying. The drying rate assists in controlling the shape of the fiber. (It has been found that too rapid drying may cause distortion of the shape of the fiber). The relative humidity of the drying air should be controlled since excess humidity will cause the gelled green fibers to stick together and excessively dry air tends to result in fiber breakage. Generally, air with relative humidity in the range of 20 to 60 percent at an operative temperature of 15-30°C is most useful, although drying air temperatures of 70 °C or more can be used. Where continuous green fibers are made and gathered together in parallel alignment juxtaposition in the form of a multi-fiber strand, the fibers or strand should be treated with a size to prevent the fibers from sticking together.

The fibers in the green or unfired gel form are dry in the sense that they do not adhere or stick to one another or other substrates and feel dry to the touch.

In certain cases it may be desirable to fire the green fiber which may contain water and organics so as to retain carbon in the fiber, for example, to provide for a black color or for a high thermal emissivity fiber. In addition, useful fiber are also obtained when only part of the organics (organic residues) are removed to result in very flexible organic-inorganic hybrid fibers. As much as 25 weight percent of the fired fiber may be organic residues (e.g., C, H, O, N, etc.)

The green fibers in their continuous form are preferably gathered or collected in the form of a strand, the strand then being accumulated in a relaxed, loose, unrestrained configuration of offset or superimposed loops as in a "figure 8".

In firing the green fibers, care should be exercised to avoid ignition of combustible material (organics within or size upon the fiber) in or evolved from the fibers resulting in an improper rate of temperature rise of the firing cycle. Such overfiring or rapid rate of heating may result in frangible fibers. The most satisfactory schedule for firing and atmosphere control to avoid over-firing can be determined empirically.

The present invention typically provides continuous uniformly round, oval, rod-like (elongated ovoid) or ribbon-like, strong flexible, smooth, glossy fired amorphous fibers. The fibers of this invention are particularly useful in making ceramic fiber textiles not only having utility in the 500-1000°C temperature range, but also in fire-resistant materials such as upholstery fabrics. The fabrics of the instant invention are also useful in combination with polymeric materials, for example, clear vinyls for upholstery fabrics. The fibers are also useful as fillers and reinforcement for plastic composites.

Objects and advantages of this invention are further illustrated by the following examples, but the particular materials and amounts thereof recited in these examples, as well as other conditions and details, should not be construed to unduly limit this invention. All percents and parts are by weight unless otherwise stated.

In the Examples below:

"22.69 wt% alumina sol" is the Al-aluminum chloride sol prepared by digesting aluminum foil (Kaiser Aluminum Co.) in the solution of $AlCl_3.6H_2O$ which was dissolved in deionized water then heated to about 85-90 °C and maintained at this temperature until all of the foil was completely digested.

The PVP[K-30]™ is a 50% aqueous solution prepared by dissolving the PVP[K-30]™ powder in deionized water in a 1:1 weight ratio. In all example, PVP is shown as that amount added to 100 parts equivalent oxide composition of the fired fibers.

Example 1 - 100 weight percent Alumina

1. 100 g of [22.69 wt percent alumina] Al-aluminium chloride sol.
2. 8.93 g of 50 wt percent aqueous solution of PVP [K-30)].
The sol was concentrated to a viscosity of 120.000 cps and spun from a 40 hole spinnerette having 76 micrometer diameter orifices. Fibers are drawn and collected at a linear rate of about 12 meters per minute. The fibers fired to 800°C, were white in color but stiffer than the aluminaphosphorus pentoxide fibers of EP 87,303,421.

Example 2

A fiber sample was prepared using the procedure of Example 1 except the precursor sol comprised 20.7 weight percent equivalent alumina. An aluminum formoacetate solution was prepared from 40 g Niacet in 70g water at 70°C. This solution was stirred into 200 g. of the alumina sol. Thirty-six g of 50% solution of PVP was stirred into the sol solution mixture. This mixture was concentrated in a Rotavapor to 88,000 cps. After standing, the viscosity increased to 232.000 cps. the fiberizable concentrate contained 24.4% alumina equivalent by weight.

Spinning into fibers was accomplished by extruding at a pressure of 4 MPa (580 psi) though a stainless steel die with forty 75-micrometer diameter holes. Drawing the extruded filaments through a dryer (27-32 °C) at a linear rate of 54 m/min (180 feet/min.) resulted in fiber that was then drawn together in a strand and deposited randomly in a stainless steel belt moving continuously through 4.2 meter (14 foot) long kiln. The strands passed through the kiln over a 20 min. period of time and reached a maximum temperature of 600°C for several minutes. The 600°C fibers were amorphous. The resultant fibers were light brown in color, transparent and clear under the microscope and felt very much like hair. They could be abraded continuously through the fingers without dusting. They had a tensile strength of 1.7 GPa (250,000 psi). The diameter of the fired fibers was 11 to 12 micrometers.

Calcination of the fibers at 620 °C for 15 min. caused them to lose 21 percent of their weight which indicated a fugitive content of 21 weight percent. After firing to 700°C the fibers were white and they no longer had a soft quality.

## Claims

1. A fired, amorphous, soft, flexible organic - inorganic hybrid fiber consisting essentially of amorphous alumina and fugitive organic residue, the proportion of the fugitive organic residue being up to 25% by weight, based on the total fiber composition, the fibers being essentially free of silica.

2. A soft, flexible organic - inorganic hybrid fiber according to claim 1 wherein said fugitive organic residue contains carbon, hydrogen, oxygen and nitrogen.

3. A soft, flexible organic - inorganic hybrid fiber according to claim 1 wherein said fugitive organic residue is derived from polyvinylpyrrolidone.

4. A soft, flexible organic - inorganic hybrid fiber according to claim 1 or claim 3 wherein said fugitive organic residue is derived from aluminum formoacetate.

5. A soft, flexible organic - inorganic hybrid fiber according to any preceding claim which is transparent.

6. A soft, flexible organic - inorganic hybrid fiber according to any preceding claim wherein said fugitive organic residue is removable by heating the fiber to a temperature of 620°C for 15 minutes.

7. A soft, flexible organic - inorganic hybrid fiber according to any preceding claim which contains from 21 to 25 weight % fugitive organic residue.

8. A method of forming a fiber as claimed in claim 1, consisting essentially of the steps of preparing a viscous sol containing an alumina precursor and organic material, drawing or spinning the sol to form a fiber, dehydratively or evaporatively gelling or hydrolysing the drawn-or spun fiber, drying the fiber and firing the fiber at a temperature which leaves a fugitive organic residue, to form a soft, flexible organic - inorganic hybrid fiber.

9. A method as claimed in claim 8 wherein said viscous sol contains polyvinylpyrrolidone.

10. A method as claimed in claim 9 wherein said aluminum precursor is aluminum formoacetate.

11. A method as claimed in any of claims 8 to 10 wherein the conditions are such that the amount of fugitive organic residue remaining in the fiber is 21 to 25 weight %, based on the total fiber composition.

**Patentansprüche**

1. Gebrannte, amorphe, weiche, flexible organische/anorganische Hybridfaser, die im wesentlichen amorphes Aluminiumoxid und flüchtige organische Rückstände aufweist, wobei der Anteil des flüchtigen organischen Rückstands bis zu 25 Gewichtsprozent bezogen auf das Gesamtgewicht der Faserzusammensetzung beträgt und die Fasern im wesentlichen frei sind von Siliciumdioxid.

2. Weiche, flexible organische/anorganische Hybridfaser nach Anspruch 1, bei welcher der flüchtige organische Rückstand Kohlenstoff, Wasserstoff, Sauerstoff, Stickstoff enthält.

3. Weiche, flexible organische/anorganische Hybridfaser nach Anspruch 1, bei welcher sich der flüchtige organische Rückstand von Polyvinylpyrrolidon ableitet.

4. Weiche, flexible organische/anorganische Hybridfaser nach Anspruch 1 oder 3, bei welcher sich der flüchtige organische Rückstand von Aluminiumformoacetat ableitet.

5. Weiche, flexible organische/anorganische Hybridfaser nach einem der vorstehenden Ansprüche, die transparent ist.

6. Weiche, flexible organische/anorganische Hybridfaser nach einem der vorstehenden Ansprüche, bei welcher der flüchtige organische Rückstand durch Erhitzen der Faser auf eine Temperatur von 620 °C für 15 Minuten entfernt werden kann.

7. Weiche, flexible organische/anorganische Hybridfaser nach einem der vorstehenden Ansprüche, die von 21 bis 25 Gewichtsprozent flüchtigen organischen Rückstand enthält.

8. Verfahren zur Herstellung einer gebrannten Faser nach Anspruch 1, im wesentlichen umfassend die Schritte der Herstellung eines viskosen Sols, das ein Aluminiumoxid-Präkursor und organische Substanz enthält, Ausziehen oder Verspinnen des Sols, um eine Faser zu bilden, wasserabspaltendes oder verdampfendes Gelbilden oder Hydrolysieren der ausgezogenen oder versponnenen Fasern, Trocknen und Brennen der Fasern bei einer Temperatur, bei welcher der flüchtige organische Rückstand abgegeben wird, um eine weiche, flexible organische/anorganische Hybridfaser zu bilden.

9. Verfahren nach Anspruch 8, bei welchem das viskose Sol Polyvinylpyrrolidon enthält.

10. Verfahren nach Anspruch 9, bei welchem der Aluminium-Präkursor Aluminiumformoacetat ist.

11. Verfahren nach eine der Ansprüche 8 bis 10, bei welchem die Bedingungen derart beschaffen sind, daß die Menge des in der Faser verbleibenden flüchtigen organischen Rückstands bezogen auf die Gesamtzusammensetzung der Faser 21 bis 25 Gewichtsprozent beträgt.

**Revendications**

1. Fibre hybride organique-inorganique, réfractaire, amorphe, molle et flexible, formée essentiellement d'alumine amorphe et d'un résidu organique volatil, la proportion, par rapport à la composition totale de la fibre, les poids, par rapport à la composition totale de la fibre, les fibres étant essentiellement exemptes de silice.

2. Fibre hybride organique-inorganique molle et flexible selon la revendication 1, dans laquelle ledit résidu organique volatil contient du carbone, de l'hydrogène, de l'oxygène et de l'azote.

3. Fibre hybride organique-inorganique molle et flexible selon là revendication 1, dans laquelle ledit résidu organique volatil provient de la vinylpyrrolidone.

4. Fibre hybride organique-inorganique molle et flexible selon la revendication 1 ou la revendication 3, dans laquelle ledit résidu organique volatil provient du formoacétate d'aluminium.

5. Fibre hybride organique-inorganique molle et flexible selon l'une quelconque des revendications précédentes, caractérisée en ce qu'elle est transparente.

6. Fibre hybride organique-inorganique molle et flexible selon l'une quelconque des revendications précédentes, dans laquelle ledit résidu organique volatil peut être éliminé par chauffage de la fibre à la température de 620°C pendant 15 minutes.

7. Fibre hybride organique-inorganique molle et flexible selon l'une quelconque des revendications précédentes, contenant de 21 à 25 % en poids de résidu organique volatil.

8. Procédé de préparation d'une fibre telle que revendiquée dans la revendication 1, comprenant essentiellement les étapes de préparation d'un sol visqueux contenant un précurseur d'alumine et une matière organique, étirage ou filage du sol pour former une fibre, gélification par déshydratation ou évaporation, ou hydrolyse de la fibre étirée ou filée, séchage de la fibre et cuisson de la fibre à une température qui laisse un résidu organique volatil, pour former une fibre hybride organique-inorganique molle et flexible,

9. Procédé tel que revendiqué dans la revendication 8, dans lequel ledit sol visqueux contient de la polyvinylpyrrolidone.

10. Procédé tel que revendiqué dans la revendication 9, dans lequel ledit précurseur d'alumine est le formoacétate d'aluminium.

11. Procédé tel que revendiqué dans l'une quelconque des revendications 8 à 10, dans lequel les conditions sont telles que la quantité de résidu organique volatil restant dans la fibre est de 21 à 25 % en poids, par rapport à la composition totale de la fibre.